Europäisches Patentamt

European Patent Office

Office européen des brevets

(19)

(11) Veröffentlichungsnummer : **0 039 789**
**B1**

(12) **EUROPÄISCHE PATENTSCHRIFT**

(45) Veröffentlichungstag der Patentschrift :
16.02.83

(21) Anmeldenummer : 81102724.2

(22) Anmeldetag : 10.04.81

(51) Int. Cl.³ : **C 25 D 13/06**, **C 09 D 3/727**, **C 08 L 33/00**, **C 08 F246/00**

(54) Verkappte Isocyanatgruppen enthaltende Lackbindemittel und ihre Verwendung für die kathodische Elektrotauchlackierung.

(30) Priorität : 08.05.80 DE 3017603

(43) Veröffentlichungstag der Anmeldung :
18.11.81 Patentblatt 81/46

(45) Bekanntmachung des Hinweises auf die Patenterteilung : 16.02.83 Patentblatt 83/07

(84) Benannte Vertragsstaaten :
AT BE DE FR GB IT NL

(56) Entgegenhaltungen :
DE A 2 460 785
US A 3 692 746
US A 3 883 483
US A 3 939 051

(73) Patentinhaber : BASF Aktiengesellschaft
Carl-Bosch-Strasse 38
D-6700 Ludwigshafen (DE)

(72) Erfinder : Gimpel, Juergen, Dr.
Osloer Weg 44
D-6700 Ludwigshafen (DE)
Erfinder : Feuerherd, Karl-Heinz, Dr.
Berner Weg 34
D-6700 Ludwigshafen (DE)
Erfinder : Schenck, Hans-Uwe, Dr.
Erlenweg 6
D-6706 Wachenheim (DE)

EP 0 039 789 B1

## Verkappte Isocyanatgruppen enthaltende Lackbindemittel und ihre Verwendung für die kathodische Elektrotauchlackierung

Die vorliegende Erfindung betrifft Lackbindemittel auf Basis eines tertiäre Aminogruppen, verkappte Isocyanatgruppen, Hydroxyl- und Ethergruppen enthaltenden Copolymerisats und deren Verwendung für Elektrotauchlacke.

Bindemittel aus Acrylatharzen, die durch Isocyanate vernetzt werden, sind für die Elektrotauchlackierung bekannt. So beschreibt die US-A-3 883 483 eine kathodisch abscheidbare Polymerzusammensetzung, die das Umsetzungsprodukt eines halbseitig verkappten Diisocyanats mit einer ethylenisch ungesättigten Hydroxylverbindung, wie Hydroxyethylacrylat enthält. Auf diese Weise ist jedoch die für die Vernetzung erforderliche Isocyanatgruppe über eine Esterbindung an die Kohlenstoffkette des Polymers gebunden. Ein Teil der Esterbindungen wird durch Hydrolyse bei der Badalterung des Elektrotauchlacks gespalten. Dadurch wird die Zusammensetzung der für die Vernetzung erforderlichen Bestandteile im Laufe der Badalterung geändert. Dies führt zu einer Verschlechterung der chemischen Beständigkeit und des Korrosionsschutzes der abgeschiedenen Lacke.

Die US-A-3 976 615 beschreibt Bindemittel für Elektrotauchlacke auf der Basis von Polyethern, die 1,2 bis 2 ungesättigte Ethergruppen pro Molekül enthalten und mit ungesättigten Monomeren, die Aminogruppen enthalten, z. B. mit Dimethylaminoethylmethacrylat, copolymerisiert werden. Als Vernetzer werden N-Alkoxymethyl(meth)acrylamide, Phenoplaste oder Aminoplaste genannt. Durch diese Vernetzer werden die Elektrotauch-Bäder jedoch sehr spannungsempfindlich. Wird auf diese Vernetzer verzichtet, so sind die Beständigkeit gegenüber Chemikalien und die mechanischen Eigenschaften der Lacküberzüge nicht mehr ausreichend.

In der DE-A-29 24 756 werden Bindemittel für Elektrotauchlacke vorgeschlagen, die verkapptes Vinylisocyanat als Comonomer enthalten. Der Korrosionsschutz dieser Elektrotauchlacke ist jedoch noch verbesserungsbedürftig.

Der vorliegenden Erfindung lag die Aufgabe zugrunde, Lackbindemittel, insbesondere solche für Elektrotauchlacke aufzuzeigen, deren Überzüge einen guten Korrosionsschutz aufweisen. Die Bindemittel sollen für die Vernetzungsreaktion eine definierte Menge an verkappten Isocyanatgruppen enthalten, die direkt an die Kohlenstoffkette des Polymers gebunden sind. Dabei können im Polymermolekül gegebenenfalls noch andere reaktive Gruppen enthalten sein, so daß die Polymeren als selbst- und fremdvernetzende Bindemittel eingesetzt werden können.

Überraschenderweise wurde gefunden, daß sich Polymerisate herstellen lassen, die neben verkapptem N(1-alkenyl)-isocyanat Addukte von olefinisch ungesättigten Alkoholen an Epoxidharze auf Basis Bisphenol A/Epichlorhydrin einpolymerisiert enthalten, trotz der durch die verkappten N(1-alkenyl)-isocyanat-Monomeren bedingten niedrigen Polymerisationstemperaturen.

Gegenstand der vorliegenden Erfindung sind Lackbindemittel auf Basis eines tertiäre Aminogruppen, verkappte Isocyanatgruppen, Hydroxyl- und Ethergruppen enthaltenden Copolymerisats, das durch zumindest teilweise Salzbildung mit einer Säure wasserlöslich oder wasserdispergierbar ist, die dadurch gekennzeichnet sind, daß das Copolymerisat einpolymerisiert enthält :

(A) 6 bis 22 Gew.-% mindestens einer olefinisch ungesättigten Verbindung, die eine tertiäre Aminogruppe enthält,

(B) 10 bis 35 Gew.-% eines mit einem CH-, OH- oder NH-aciden Verkappungsmittel verkappten N(1-alkenyl)-isocyanats,

(C) 20 bis 50 Gew.-% eines Addukts aus einem Epoxidharz auf der Basis von Bisphenol A und Epichlorhydrin mit einem Molekulargewicht zwischen 380 und 3 500 und einem olefinisch ungesättigten 3 bis 20 Kohlenstoffatome enthaltenden Alkohol,

(D) 10 bis 64 Gew.-% einer oder mehrerer unter (A) bis (C) nicht genannter copolymerisierbarer olefinisch ungesättigter Verbindungen,

mit der Maßgabe, daß das Copolymerisat ein mittleres Molekulargewicht zwischen 1 000 und 20 000 aufweist und die Summe der unter (A) bis (D) genannten Prozentzahlen 100 ist.

Gegenstand der vorliegenden Erfindung ist außerdem die Verwendung dieser Lackbindemittel für die kathodische Elektrotauchlackierung metallischer Gegenstände, wobei die erfindungsgemäßen Lackbindemittel sowohl als selbstvernetzende Bindemittel wie auch in Kombination mit polyfunktionellen Vernetzungsmitteln als fremdvernetzende Bindemittel verwendet werden können.

Die erfindungsgemäßen Lackbindemittel erfüllen die oben genannten Erfordernisse und zeigen insbesondere hinsichtlich Korrosionsschutz und Chemikalienbeständigkeit der damit erhaltenen Überzüge wesentliche Verbesserungen.

Der aus dem erfindungsgemäßen Lackbindemittel hergestellte Elektrotauchlack enthält im allgemeinen 7 bis 20 Gew.-% des protonierten Copolymerisats.

Zu den Aufbaukomponenten des erfindungsgemäßen Lackbindemittels ist im einzelnen folgendes auszuführen :

(A) Als Komponente (A) kommen übliche ethylenisch ungesättigte Verbindungen mit einer tertiären

2

Aminogruppe in Betracht, wie z. B. Dialkylaminoalkyl(meth)-acrylate mit 1 bis 8, vorzugsweise 1 bis 4 Kohlenstoffatomen in den Alkylgruppen, wie tertiäre Amino(meth)acrylester, z. B. N,N-Dimethylaminoethylmethacrylat, N,N-Diethylaminoethylacrylat, oder tertiäre Amino(meth)acrylamide wie N,N-Dimethylaminopropyl(meth)acrylamid und N,N-Diethylaminopropyl(meth)acrylamid.

Komponente (A) ist im erfindungsgemäßen Lackbindemittel in Mengen von 6 bis 22, vorzugsweise 6 bis 15 Gew.-% einpolymerisiert. Besonders bevorzugt sind 6 bis 10 Teile der genannten Amino(meth)acrylamide.

(B) Die Komponente (B) ist ein Addukt aus einem N(1-alkenyl)isocyanat und einem CH-, OH- oder NH-aciden Verkappungsmittel. Geeignete N(1-alkenyl)-isocyanate sind solche mit 2 bis 4 Kohlenstoffatomen in der Alkenylgruppe, vorzugsweise Vinylisocyanat und/oder Propenylisocyanat. Als Verkappungsmittel zur Herstellung der Komponente (B) können beispielsweise Monophenole wie Phenol, Kresol, Trimethylphenol, primäre Alkohole oder sekundäre Alkohole wie Isopropanol oder Cyclohexanol, tertiäre Alkohole, wie t-Butanol, oder t-Amylakohol, leicht enolisierbare Verbindungen, wie Acetessigester, Acetylaceton, Malonsäurederivate wie Malonsäurediester mit 1 bis 8 Kohlenstoffatomen in der Alkoholkomponente, Malonsäuredinitril, sekundäre aromatische Amine wie N-Methylanilin, N-Methyltoluidin, N-Phenyltoluidin, Imide wie Succinimid oder Phthalimid, Lactame wie ε-Caprolactam, δ-Valerolactam oder Laurinlactam, sowie Oxime, wie Acetonooxim, Butanonoxim und Cyclohexanonoxim und aromatische Triazole wie Triazabenzol eingesetzt werden. Besonders bevorzugt als Verkappungsmittel der N(1-alkenyl)-isocyanate sind t-Butanol, Cyclohexanol, ε-Caprolactam, Methylethylketonoxim und Triazabenzol.

Die Herstellung des verkappten N(1-alkenyl)-isocyanats, wie z. B. des Vinylisocyanats kann z. B. nach einer Analogievorschrift in Houben-Weyl, Methoden der organischen Chemie, Band 14/2, (1963) Seite 61 bis 70 erfolgen. Sie wird vorzugsweise in Gegenwart von Lösungsmittel durchgeführt. Bei der Umsetzung des N(1-alkenyl)-isocyanats (Vinylisocyanats) mit dem Verkappungsmittel werden etwa äquimolare Mengen eingesetzt. Ein Überschuß des Isocyanats ist zu vermeiden, da dies später zu Vernetzungen Anlaß geben könnte.

Komponente (B) ist in einer Menge von 10 bis 35, vorzugsweise 15 bis 25 Gew.-% im erfingungsgemäßen Copolymerisat einpolymerisiert.

(C) Die Komponente (C) ist ein Umsetzungsprodukt aus einem Epoxidharz aus Bisphenol A und Epichlorhydrin mit einem Molekulargewicht zwischen 380 und 3 500, die vorzugsweise etwa 2 Epoxidgruppen pro Molekül enthalten, und olefinisch ungesättigten, 3 bis 20 Kohlenstoffatome enthaltenden Alkoholen, wie z. B. Allylalkohol, Geraniol, Buten-1-01-3, Farnesol, Sojaalkohol, Leinölalkohol oder Alkanolallylethern und Alkanolallylthioethern mit 2 bis 6 Kohlenstoffatomen im Alkanolrest, wie z. B. Allylhydroxypropylether und Hydroxyethylallylthioether, wobei das Umsetzungsprodukt aus Epoxidharz und ungesättigtem Alkohol vorzugsweise epoxidgruppenfrei ist. Ein Molekulargewicht des Epoxidharzes — vor der Umsetzung mit den Alkoholen — zwischen 380 und 1 400 ist bevorzugt. Besonders bevorzugt ist das Umsetzungsprodukt eines derartigen Epoxidharzes mit einem mittleren Molekulargewicht von etwa 900 und Allylalkohol oder Buten-1-01-3.

Komponente (C) ist in einer Menge von 20 bis 50, vorzugsweise 25 bis 50 Gew.-% im erfindungsgemäßen Copolymerisat einpolymerisiert.

(D) Als Komponente (D) kommen andere unter (A) bis (C) nicht genannte copolymerisierbare olefinisch ungesättigte Verbindungen in Betracht, wie Ester der Acryl- und Methacrylsäure mit Monoalkoholen, die 1 bis 18, vorzugsweise 1 bis 8 Kohlenstoffatome aufweisen, wie z. B. Methylacrylat, Ethylacrylat, Butylacrylat, Ethylhexylacrylat und Methylmethacrylat. Des weiteren kommen alle anderen copolymerisierbaren ungesättigten Verbindungen in Frage, insbesondere Vinylester von Carbonsäuren mit 2 bis 10 Kohlenstoffatomen, wie z. B. Vinylacetat, Vinylpropionat und Vinylpivalat, Vinylaromaten, wie z. B. Styrol, Acrylnitril und olefinisch ungesättigte Triglyceride, wie z. B. isomerisiertes Leinöl, sowie Gemische der genannten Monomeren.

Komponente (D) ist im erfindungsgemäßen Copolymerisat in einer Menge von 10 bis 64, vorzugsweise 15 bis 60 Gew.-% einpolymerisiert.

Die Herstellung der erfindungsgemäßen Copolymeren erfolgt zweckmäßigerweise in polaren, keine OH-Gruppen aufweisenden Lösungsmitteln, wie z. B. Ethern, wie Tetrahydrofuran, oder Estern, wie Essigester oder n-Butylacetat, aromatischen Kohlenwasserstoffen, wie Xylol oder Toluol oder Gemischen dieser Lösungsmittel in Gegenwart radikalbildender Initiatoren, wie Azobiscarbonsäureamiden, Azobiscarbonsäurenitrilen oder Peroxiden, im allgemeinen bei Temperaturen zwischen 50 und 120 °C, vorzugsweise zwischen 60 und 90 °C, gegebenenfalls in Gegenwart von Reglern wie t-Dodecylmercaptan oder Diisopropylxanthogendisulfid.

Beispiele für besonders bevorzugte Lackbindemittel sind Copolymerisate aus 6 bis 12 Gew.-% N,N-Dimethylaminopropylmethacrylamid, 20 bis 25 Gew.-% mit-ε-Caprolactam oder Methylethylketonoxim verkapptem Vinylisocyanat, 25 bis 50 Gew.-% eines Umsetzungsprodukts aus einem Epoxidharz aus Bisphenol A und Epichlorhydrin mit einem mittleren Molekulargewicht von 900 und Allylalkohol und 13 bis 49 Gew.-% der Komponente (D), wie z. B. Butylacrylat oder 2-Ethylhexylacrylat.

Bevorzugt ist ein Äquivalenzverhältnis der reaktiven Wasserstoffatome der Komponente (C) zu den verkappten Isocyanatgruppen der Komponente (B) von etwa 1 : 1.

Die erfindungsgemäßen Copolymerisate sind unvernetzte Produkte mit einem Molgewicht zwischen 1 000 und 20 000, vorzugsweise zwischen 2 000 und 10 000 (gemessen mit dem Dampfdruckosmometer).

Die K-Werte (nach Fikéntscher) (3 %ig in Aceton) liegen dementsprechend zwischen 15 und 35, vorzugsweise zwischen 18 und 24.

Die erfindungsgemäßen Copolymerisate enthalten tertiäre Aminogruppen, verkappte Isocyanatgruppen und gegenüber Isocyanatgruppen reaktionsfähige Strukturen sowie gegebenenfalls C-C-Doppelbindungen, die beim Einbrennen der Lacküberzüge mit zur Vernetzung beitragen.

Diese Copolymerisate werden erfindungsgemäß als Lackbindemittel verwendet und sind durch zumindest teilweise Salzbildung mit Säuren wasserlöslich bzw. wasserdispergierbar.

Die Copolymerisate werden dazu zumindest teilweise mit Säuren neutralisiert. Als Neutralisationsmittel können organische und anorganische Säuren dienen. Bevorzugt sind Essigsäure, Milchsäure und Gluconsäure. Der Neutralisationsgrad für die Anwendung der erfindungsgemäßen Lackbindemittel in wäßrigem Medium liegt im allgemeinen zwischen 10 und 100 %.

Außer dem erfindungsgemäßen Bindemittel kann der Lack polyfunktionelle Vernetzungsmittel, wie hydroxylgruppenhaltige Polymere, Polyester oder Polyadditionsverbindungen, wie z. B. Aminoplaste oder Phenol-Formaldehyd-Harze, sowie Pigmente wie z. B. Titandioxid, Talkum und Ruß je nach Anwendungszweck in Mengen von 10 bis 60, vorzugsweise 20 bis 50 Gewichtsteilen, bezogen auf 100 Gewichtsteile Bindemittel enthalten. Darüber hinaus können anorganische und organische Buntpigmente in Mengen von bis zu 5 Gewichtsteilen sowie Füllstoffe in Mengen von ebenfalls bis zu 5 Gewichtsteilen enthalten sein. Verlaufsmittel können bis zu 10 Teilen, Wachse zur Erhöhung der Kratzfestigkeit bis zu 10 Teilen und Katalysatoren für die Entkappungsreaktion wie z. B. Dibutylzinndilaurat in Mengen von bis zu 2 Teilen, jeweils bezogen auf 100 Teile Bindemittel vorhanden sein.

Die erfindungsgemäßen Lackbindemittel werden insbesondere für die kathodische Elektrotauchlackierung verwendet, und zwar als selbstvernetzende Bindemittel oder auch als fremdvernetzende Bindemittel.

Mit den erfindungsgemäßen Elektrotauchlacken lassen sich vor allem metallische Gegenstände, z. B. aus Eisen, Stahl und Aluminium beschichten.

Die Herstellung der kationischen Elektrotauchbäder erfolgt wie üblich, beispielsweise wie in W. Machu, Elektrotauchlackierung (1974) S. 155 ff beschrieben. Der Feststoffgehalt der Elektrotauchbäder liegt im allgemeinen zwischen 7 und 15 Gew.-%, der pH-Wert zwischen 4,0 und 7,5.

Die mit dem erfindungsgemäßen Bindemittel erhaltenen Überzüge weisen eine hohe Härte auf, sind sehr elastisch, chemikalienbeständig und besitzen einen guten Korrosionsschutz. Dieses hohe Eigenschaftsniveau der Lacke wird durch die Badalterung nicht negativ beeinflußt.

Die in den Beispielen genannten Teile und Prozente sind, soweit nicht anders angegeben, Gewichtsteile bzw. Gewichtsprozente.

## Herstellung der Komponente (B)

(B1) N-Vinylcarbaminsäure-tert.-Butylester :

In einem Reaktionsgefäß, versehen mit einem Intensivkühler (mit Kühlsole), Rührer, Thermometer und Zulaufgefäß werden 69 Teile Vinylisocyanat und 70 Teile Ethylacetat vorgelegt. Bei 40 °C werden innerhalb von 1 Stunde 74 Teile tert.-Butanol, 73 Teile Ethylacetat und 0,01 % Dibutylzinndilaurat zugegeben. Anschließendläßt man noch 10 Stunden bei 40 °C nachreagieren. Es entsteht eine hellgelbe klare Lösung. Isocyanatgehalt (verkappt) : 14,7 %.

(B2) N-Vinylcarbaminsäure-cyclohexylester :

In einem Reaktionsgefäß werden 69 Teile Vinylisocyanat und 89,5 Teile Ethylacetat vorgelegt und auf 40 °C aufgeheizt. Dazu wird innerhalb von 1 Stunde eine Mischung aus 110 Teilen Cyclohexanol und 89,5 Teilen Ethylacetat (0,02 % Dibutylzinndilaurat als Katalysator) gegeben. Nachreaktionszeit : 2 Stunden bei 40 °C. Man erhält eine hellgelbe Lösung, aus der sich beim Abkühlen das Reaktionsprodukt in Form von Kristallen abscheidet. Isocyanat-Gehalt (verkappt) : 11,7 %.

(B3) Vinylisocyanat-ε-Caprolactam-Addukt :

In einem Reaktionsgefäß werden 113 Teile ε-Caprolactam und 91 Teile Ethylacetat (+ 0,015 % Dibutylzinndilaurat) vorgelegt und auf ca. 50 °C aufgeheizt. Dazu wird innerhalb von 1 Stunde eine Mischung aus 69 Teilen Vinylisocyanat und 91 Teilen Ethylacetat zugetropft. Nachreaktionszeit : 5 Std. Man erhält eine hellgelbe klare Lösung. Isocyanat-Gehalt (verkappt) : 11,5 %.

## Herstellung der Komponente (C)

50 Teile eines Epoxidharzes aus Bisphenol A und Epichlorhydrin mit einem mittleren Molekulargewicht von 900 und einem Epoxidwert von 0,2 bis 0,223 und 400 Teile Allylalkohol werden zusammen auf 80 °C erhitzt bis eine homogene Lösung entsteht.

Man gibt 1,75 Teile Bortrifluorid-Diethyletheratlösung, 75 Teile Allylalkohol und 0,1 Teile Hydrochinonmonomethylether hinzu. Nach 2-stündigem Erhitzen auf Rückflußtemperatur wird der überschüssige Allylalkohol abdestilliert und das Produkt in Ethylacetat aufgenommen. Man erhält eine gelbliche klare Lösung mit einem Epoxidwert von 0,00 und einem Feststoffgehalt von 61 %.

## Herstellung der Copolymerisatlösungen

## Polymer 1

In einem mit Rührer, Rückflußkühler und Innenthermometer ausgestatteten Reaktionsgefäß werden 12 Teile Essigsäureethylester und 20 % des Zulaufs vorgelegt. Der Zulauf besteht aus 50 Teilen der Komponente C, 20 Teilen Acrylnitril, 70 Teilen Ethylhexylacrylat, 40 Teilen des Addukts B 3, 20 Teilen N,N-Dimethylaminopropylmeth-acrylamid, 6 Teilen t-Dodecylmerkaptan und 4 Teilen 2,2'-Azobis-(2,4-Dimethyl-Valeronitril). Die Vorlage wird auf 70 °C erhitzt. Der Zulauf wird innerhalb von 3 Stunden bei 70 °C zugegeben. Anschließend wird eine Stunde nachpolymerisiert. Dann werden noch 0,5 % Initiator zudosiert und nachpolymerisiert bis der Umsatz 100 % beträgt. Man erhält eine klare Lösung eines Harzes mit dem K-Wert von 17,7 und dem Feststoffgehalt von 72 %.

## Polymer 2

Wie bei Polymer 1 beschrieben, wird ein Polymer hergestellt, wobei an Stelle des Addukts B3 das Addukt B2 verwendet wird. Es hat einen K-Wert von 17,6 und einen Feststoffgehalt von 69,2 %.

## Polymer 3

Wie bei Polymer 1 beschrieben, werden 50 Teile der Komponente C, 20 Teile Acrylnitril, 50 Teile Ethylhexylacrylat, 40 Teile des Addukts B3, 20 Teile eines isomerisierten Leinöls und 20 Teile N,N-Dimethylaminopropylmethacrylamid copolymerisiert. Die Polymerlösung hat einen Feststoffgehalt von 70,8 % und einen K-Wert von 23,6.

## Polymer 4

Wie bei Polymer 3 beschrieben, wird ein Polymer hergestellt, wobei an Stelle des Addukts B3 das Addukt B2 verwendet wird. Es hat einen K-Wert von 22,3 und einen Feststoffgehalt von 72,4 %.

## Vergleichspolymer 1

Wie bei Polymer 1 beschrieben, werden 70 Teile der Komponente C, 20 Teile Acrylnitril, 90 Teile Ethylhexylacrylat und 20 Teile N,N-Dimethylaminopropylmethacrylamid copolymerisiert. Die Polymerlösung hat einen K-Wert von 17,7 und einen Feststoffgehalt von 70,8 %.

## Vergleichspolymer 2

Wie bei Polymer 1 beschrieben, werden 29 Teile des Addukts B3, 25 Teile Hydroxypropylacrylat, 10 Teile Styrol, 30 Teile Isobutylacrylat und 6 Teile N,N-Dimethylaminopropylmethacrylamid copolymerisiert. Die Polymerlösung hat einen K-Wert von 24 und einen Feststoffgehalt von 64,5 %.

## Elektrotauch-Lack 1

189 Teile der Polymelösung 1 werden mit 2,17 Teilen Essigsäure versetzt. Mit vollentsalztem Wasser wird eine 10 %ige Dispersion hergestellt, mit der während einer Abscheidezeit von 2 Minuten als Kathode geschaltete zinkphosphatierte Bleche beschichtet werden, die dann 30 Minuten bei 180 °C eingebrannt werden.

## Elektrotauch-Lack 2

145 Teile der Polymerlösunl 2 werden mit 2,2 Teilen Essigsäure versetzt. Mit vollentsalztem Wasser wird eine 10 %ige Dispersion hergestellt, mit der während einer Abscheidezeit von 2 Minuten als Kathode geschaltete zinkphosphatierte Bleche beschichtet werden, die dann 30 Minuten bei 220 °C eingebrannt werden.

## Elektrotauch-Lack 3

Aus 141 Teilen der Polymerlösung 3 wird wie bei Elektrotauch-Lack 1 beschrieben, eine 10 %ige wäßrige Dispersion hergestellt, mit der als Kathode geschaltete zinkphosphatierte Bleche beschichtet werden, die dann 30 Minuten bei 180 °C eingebrannt werden.

## Elektrotauch-Lack 4

Aus 138 Teilen der Polymerlösung 4 wird, wie bei Elektrotauch-Lack 2 beschrieben, ein Elektrotauch-Lack hergestellt.

## Elektrotauch-Lack 5 (Vergleichsbeispiel ohne Isocyanat-Monomer)

5

Aus 141 Teilen des Vergleichspolymers 1 wird, wie bei Elektrotauch-Lack 1 beschrieben, ein Elektrotauch-Lack hergestellt.

Elektrotauch-Lack 6 (Vergleichsbeispiel ohne Isocyanat-Monomere mit Phenoplast als Vernetzer)

Aus 100 Teilen des Vergleichspolymeren 1 und 44 Teilen eines handelsüblichen Bisphenol-A-Formaldehyd Harzes (FG = 68 %) wird, wie bei Elektrotauch-Lack 1 beschrieben, ein Elektrotauch-Lack hergestellt.

Elektrotauch-Lack 7 (Vergleichsbeispiel ohne Komponente C)

Aus 155 Teilen des Vergleichspolymeren 2 wird, wie bei Elektrotauch-Lack 1 beschrieben, ein Elektrotauch-Lack hergestellt.

Die Eigenschaften der mit den Elektrotauchlacken 1 bis 7 erhaltenen Lackierungen sind der Tabelle zu entnehmen.

(Siehe die Tabelle, Seite 7)

Tabelle (Eigenschaften der Elektrotauchlackierungen)

| Elektrotauch-Lack-Nr. | 1 | 2 | 3 | 4 | 5 | 6 | 7 |
|---|---|---|---|---|---|---|---|
| Abscheidespannung [V] | 300 | 350 | 350 | 300 | 300 | 60 | 200 |
| Schichtdicke [$\mu$m] | 13 | 14 | 17 | 13 | 20 | 20 | 10 |
| Pendelhärte [sec] (DIN 53 157) | 179 | 192 | 189 | 192 | 53 | 174 | 164 |
| E-Tiefung [mm] (DIN 53 156) | 8,0 | 10 | 8,5 | 10 | 9,0 | 6,5 | 7,5 |
| Acetonbeständigkeit | i O | i O | i O | i O | n i O | n i O | i O |
| Korrosionsschutz (DIN 50 021) | 168 h: 5 mm | 240 h: 1 mm | 240 h: 8 mm | 240 h: 1 mm | 168 h: 12 mm | 168 h: 4 mm | 96 h: 16 mm |

i O = in Ordnung

n i O = nicht in Ordnung

0 039 789

## Ansprüche

1. Lackbindemittel auf Basis eines tertiäre Aminogruppen, verkappte Isocyanatgruppen, Hydroxyl- und Ethergruppen enthaltenden Copolymerisats, das durch zumindest teilweise Salzbildung mit einer Säure wasserlöslich oder wasserdispergierbar ist, dadurch gekennzeichnet, daß das Copolymerisat einpolymerisiert enthält

(A) 6 bis 22 Gew.-% mindestens einer olefinisch ungesättigten Verbindung, die eine tertiäre Aminogruppe enthält,

(B) 10 bis 35 Gew.-% eines mit einem CH-, OH- oder NH-aciden Verkappungsmittel verkappten N(1-alkenyl)-isocyanats,

(C) 20 bis 50 Gew.-% eines Addukts aus einem Epoxidharz auf der Basis von Bisphenol A und Epichlorhydrin mit einem Molekulargewicht zwischen 380 und 3 500 und einem olefinisch ungesättigten 3 bis 20 Kohlenstoffatome enthaltenden Alkohol,

(D) 10 bis 64 Gew.-% einer oder mehrerer unter (A) bis (C) nicht genannter copolymerisierbarer olefinisch ungesättigter Verbindungen,

mit der Maßgabe, daß das Copolymerisat ein mittleres Molekulargewicht zwischen 1 000 und 20 000 aufweist und die Summe der unter (A) bis (D) genannten Prozentzahlen 100 ist.

2. Lackbindemittel nach Anspruch 1, dadurch gekennzeichnet, daß als Komponente (B) ein Addukt aus Vinylisocyanat oder Propenylisocyanat und Cyclohexanol, t-Butanol, ε-Caprolactam, Methylethylketonoxim oder Triazabenzol im Molverhältnis Isocyanat/Verkappungsmittel von 1 : 1 verwendet wird.

3. Lackbindemittel nach Anspruch 1 oder 2, dadurch gekennzeichnet, daß das Äquivalentverhältnis der reaktiven Wasserstoffatome der Komponente (C) zu den verkappten Isocyanatgruppen der Komponente (B) etwa 1 : 1 beträgt.

4. Lackbindemittel nach einem der vorhergehenden Ansprüche, dadurch gekennzeichnet, daß das Copolymerisat als Komponente (A) N,N-Dimethylaminopropylmethacrylamid, als Komponente (B) mit ε-Caprolactam oder Methylethyl-Ketonoxim verkapptes Vinylisocyanat, als Komponente (C) ein Umsetzungsprodukt aus einem Epoxidharz aus Bisphenol A und Epichlorhydrin mit einem mittleren Molekulargewicht von 900 und Allylalkohol und als Komponente (D) Butylacrylat oder 2-Ethylhexylacrylat einpolymerisiert enthält.

5. Verwendung des Lackbindemittels nach einem der vorhergehenden Ansprüche als selbstvernetzendes Bindemittel für die kathodische Elektrotauchlackierung metallischer Gegenstände.

6. Verwendung des Lackbindemittels nach Anspruch 1 in Kombination mit einem polyfunktionellen Vernetzungsmittel als fremdvernetzendes Bindemittel für die kathodische Elektrotauchlackierung metallischer Gegenstände.

7. Verwendung nach Anspruch 6, dadurch gekennzeichnet, daß das polyfunktionelle Vernetzungsmittel ein hydroxylguppenhaltiges Polymeres, ein hydroxylgruppenhaltiger Polyester oder eine hydroxylgruppenhaltige Polyadditionsverbindung ist.

8. Verwendung nach Anspruch 6, dadurch gekennzeichnet, daß das polyfunktionelle Vernetzungsmittel ein Aminoplast oder Phenol-Formaldehyd-Harz ist.

## Claims

1. A surface-coating binder based on a copolymer which contains tertiary amino groups, blocked isocyanate groups, hydroxyl groups and ether groups and which, due to partial or complete salification with an acid, is water-soluble or water-dispersible, and wherein the copolymer contains, as copolymerized units,

(A) from 6 to 22 % by weight of at least one olefinically unsaturated compound containing a tertiary amino group,

(B) from 10 to 35 % by weight of an N-(1-alkenyl) isocyanate blocked with a CH-, OH- or NH-acidic blocking agent,

(C) from 20 to 50 % by weight of an adduct of an epoxy resin, based on bisphenol A and epichlorohydrin and having a molecular weight of between 380 and 3,500, with an olefinically unsaturated alcohol of 3 to 20 carbon atoms,

(D) from 10 to 64 % by weight of one or more copolymerizable olefinically unsaturated compounds not already mentioned under (A) to (C),

with the proviso that the copolymer has a mean molecular weight of between 1,000 and 20,000 and that the sum of the percentages of (A) to (D) is 100.

2. A surface-coating binder as claimed in claim 1, wherein component (B) is an adduct of vinyl isocyanate or propenyl isocyanate with cyclohexanol, t-butanol, ε-caprolactam, methyl ethyl ketone-oxime or triazabenzene, in the molar ratio os isocyanate to blocking agent of 1 : 1.

3. A surface-coating binder as claimed in claim 1 or 2, wherein the ratio of the number of equivalents of reactive hydrogen atoms of component (C) to the number of equivalents of blocked isocyanate groups of component (B) is about 1 : 1.

4. A surface-coating binder as claimed in one of the preceding claims, wherein the copolymer contains N,N-dimethylaminopropyl methacrylamide as component (A), vinyl isocyanate, blocked with ε-caprolactam or methyl ethyl ketone-oxime, as component (B), a reaction product of an epoxy resin, obtained from bisphenol A and epichlorohydrin and having a mean molecular weight of 900, with allyl alcohol, as component (C) and butyl acrylate or 2-ethylhexyl acrylate as component (D), the said components being present as copolymerized units.

5. The use of the surface-coating binder as claimed in one of the preceding claims as a self-crosslinking binder for the cathodic electrocoating of metallic articles.

6. The use of the surface-coating binder as claimed in claim 1 in combination with a polyfunctional crosslinking agent as an external crosslinking agent for the cathodic electrocoating of metallic articles.

7. The use as claimed in claim 6, wherein the polyfunctional crosslinking agent is a hydroxyl-containing polymer, polyester or polyadduct.

8. The use as claimed in claim 6, wherein the polyfunctional crosslinking agent is an aminoplast or phenolformaldehyde resin.

**Revendications**

1. Liant pour vernis à base d'un copolymère contenant des groupes amino tertiaires, des groupes isocyanate, des groupes hydroxyle et éther, rendu soluble ou dispersable dans l'eau par une salification au moins partielle par un acide, caractérisé en ce que le copolymère contient en liaison polymère :

(A) 6 à 22 % en poids d'au moins un composé à insaturation oléfinique, contenant un groupe amino tertiaire ;

(B) 10 à 35 % en poids d'un N-(alcényl-1) isocyanate bloqué à l'aide d'un agent de blocage IH-, OH- ou NH-acide ;

(C) 20 à 50 % en poids d'un composé d'addition d'une résine époxyde à base de bisphénol A et d'épichlorhydrine d'un poids moléculaire compris entre 380 et 3 500 et d'un alcool à insaturation oléfinique en $C_3$ à $C_{20}$ ;

(D) 10 à 64 % en poids d'un ou de plusieurs composés à insaturation oléfinique copolymérisables non cités sub (A) à (C),

avec les conditions que la somme des pourcentages indiqués sub (A) à (D) fasse 100 et que le copolymère possède un poids moléculaire moyen compris entre 1 000 et 20 000.

2. Liant pour vernis suivant la revendication 1, caractérisé en ce que le composant (B) est un produit d'addition d'isocyanate de vinyle ou d'isocyanate de propényle et de cyclohexanol, de butanol tertiaire, de ε-caprolactame, d'oxime de la méthyl-éthyl-cétone ou du triazabenzène, les proportions molaires de l'isocyanate et de l'agent de blocage étant dans le rapport de 1 : 1.

3. Liant pour vernis suivant la revendication 1 ou la revendication 2, caractérisé en ce que le rapport entre les équivalents d'atomes d'hydrogène réactifs du composant (C) et des groupes isocyanate bloqués du composant (B) est approximativement égal à 1 : 1.

4. Liant pour vernis suivant l'une des revendications précédentes, caractérisé en ce que le copolymère contient en liaison polymère du méthacryl-amide de N,N-diméthyl-amino-propyle comme composant (A), de l'isocyanate de vinyle bloqué par la ε-caprolactame ou l'oxime de la méthyl-éthyl-cétone comme composant (B), un produit de la réaction d'une résine époxyde à base de bisphénol A et d'épichlorhydrine d'un poids moléculaire moyen de 900 et d'alcool allylique comme composant (C) et de l'acrylate de butyle ou d'éthyl-2 hexyle comme composant (D).

5. Utilisation d'un liant pour vernis suivant l'une des revendications précédentes comme liant auto-réticulant pour le vernissage par électrodéposition cathodique d'objets métalliques.

6. Utilisation d'un liant suivant la revendication 1 en combinaison avec un agent de réticulation polyfonctionnel comme liant extrinsèque pour le vernissage par électrodéposition cathodique d'objets métalliques.

7. Utilisation selon la revendication 6, caractérisée en ce que l'agent de réticulation polyfonctionnel est un polymère à groupes hydroxyle, un polyester à groupes hydroxyle ou un composé de poly-addition à groupes hydroxyle.

8. Utilisation selon la revendication 6, caractérisée en ce que l'agent de réticulation polyfonctionnel est un aminoplaste ou une résine phénol-formaldéhyde.